(19) Europäisches Patentamt
European Patent Office
Office européen des brevets

(11) Numéro de publication : **0 165 150 B1**

(12) # FASCICULE DE BREVET EUROPÉEN

(45) Date de publication du fascicule du brevet : **07.09.88**

(51) Int. Cl.⁴ : **D 21 H 3/48, C 08 G 18/08**

(21) Numéro de dépôt : **85400995.8**

(22) Date de dépôt : **21.05.85**

(54) **Latex de polyuréthanne comme agent de collage en industrie papetière, son procédé de fabrication.**

(30) Priorité : **05.06.84 FR 8408792**

(43) Date de publication de la demande :
**18.12.85 Bulletin 85/51**

(45) Mention de la délivrance du brevet :
**07.09.88 Bulletin 88/36**

(84) Etats contractants désignés :
**AT BE CH DE FR GB IT LI NL SE**

(56) Documents cités :
**FR-A- 2 256 937**
**FR-A- 2 322 236**
**Le dossier contient des informations techniques présentées postérieurement au dépôt de la demande et ne figurant pas dans le présent fascicule.**

(73) Titulaire : **ATOCHEM**
**4 & 8, Cours Michelet La Défense 10**
**F-92800 Puteaux (FR)**

(72) Inventeur : **Laine, Antoine**
**15, Rue Rosenwald**
**F-75015 Paris (FR)**
Inventeur : **Senez, Claude**
**20 Grande Serpentine**
**F-60270 Gouvieux (FR)**

(74) Mandataire : **Foiret, Claude et al**
**ATOCHEM Département Propriété Industrielle**
**F-92091 Paris la Défense 10 Cédex 42 (FR)**

**EP 0 165 150 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un nouvel agent pour le collage en industrie papetière, plus particulièrement du papier et des cartons, consistant en un polyuréthanne cationique dispersé dans l'eau sous forme de latex, et son procédé de préparation.

Les polyuréthannes cationiques font déjà l'objet de brevets. Il est par exemple connu de préparer un composé d'ammonium quaternaire à partir d'un prépolymère à terminaisons NCO, obtenu par addition d'un polyisocyanate sur un composé dihydroxylé aliphatique monomère, allongé par un diol aliphatique contenant un azote tertiaire salifiable et/ou quaternisable. C'est le cas, par exemple, du brevet français n° 2 256 937.

Dans le brevet n° 2 322 236 sont décrits des polyuréthannes cationiques, produits de réaction de polyisocyanates de la série du diphénylméthane avec des N-alkyldialcanolamines en $C_5$-$C_{12}$ dont la chaîne alkyl est en $C_1$-$C_6$ et éventuellement des groupes réactifs servant de rupteur de chaîne, polyuréthannes portant des groupes ammonium protonisés et/ou quaternisés, en solution dans l'eau et utilisés pour le collage du papier. Ces produits, à faible poids moléculaire et bien qu'hydrophiles, sont reconnus par leurs inventeurs comme efficaces, comparativement aux produits cationiques pour le collage du papier connus antérieurement.

Selon l'invention il a été trouvé que des oligomères polyuréthannes dont la chaîne alkyl est supérieure à 7 atomes de carbone, utilisés sous forme de latex, sont particulièrement efficaces pour le collage du papier dans la masse. Le collage du papier dans la masse consiste à incorporer lors de la formation de la feuille, des produits organiques destinés à réduire voire supprimer l'hydrophilie des papiers pour les rendre aptes à l'impression et à l'écriture.

L'invention concerne donc des produits pour le collage du papier consistant en des oligouréthannes portant des groupes ammonium quaternisés, susceptibles de s'adsorber sur la fibre cellulosique, et rendus ainsi hydrodispersibles pour former un latex prêt à l'utilisation.

Cet oligouréthanne cationique comporte aussi une chaîne aliphatique d'au moins 7 carbones conférant un caractère hydrophobe propre à l'efficacité du collage. L'invention comprend en outre le procédé d'obtention de ces latex à partir de toluène diisocyanate et de N-alkyldialconolamine.

L'invention comprend enfin un procédé pour le collage des papiers et cartons, caractérisé en ce que l'on peut utiliser ces produits de collage en milieu neutre. Il est entendu que le terme collage concerne aussi bien un collage dans la masse qu'un collage en surface.

Les oligouréthannes utilisés selon l'invention sont des produits de réaction d'un polyisocyanate organique, en l'occurence le toluène diisocyanate (TDI), d'une dialcanolamine N-substituée par une chaîne aliphatique comprenant au moins 7 atomes de carbone, et éventuellement un composé monofonctionnel faisant fonction de rupteur de chaîne. Ces produits de réaction sont convertis en oligouréthannes contenant des ions ammonium quaternisés par réaction des azotes tertiaires de la N-alkyldialcanolamine avec un agent quaternisant approprié. La N-alkyldialcanolamine est de préférence modifiée en ammonium quaternaire avant sa réaction avec le toluène diisocyanate. Le taux de quaternisation est tel que l'oligouréthanne puisse être autodispersible, sans toutefois altérer le pouvoir hydrophobe du produit. Les proportions des produits de départ sont choisies de manière à obtenir un polymère de poids moléculaire maximal 3 000 et pouvant descendre jusqu'à 500 dans le cas de l'utilisation d'un rupteur de chaîne.

Les produits de l'invention sont donc des oligouréthannes cationiques, de poids moléculaires compris entre 500 et 3 000, possédant un important pouvoir hydrophobe, dispersibles dans l'eau pour former un latex stable susceptible de s'adsorber sur les fibres cellulosiques et donc utilisable pour le collage du papier.

Pour la préparation de ces oligouréthannes on utilise comme polyisocyanate les diisocyanates de 2,4- ou 2,6- toluène ainsi que leurs mélanges (TDI).

Par N-alkyldialcanolamine on entend les composés organiques contenant deux groupes hydroxy reliés chacun à l'azote par une chaîne aliphatique de 2 à 6 carbones ou polyoxyalkylénique de degré de polycondensation de 1 à 4 et un substituant aliphatique hydrophobe, lui aussi relié à l'azote et comprenant donc au moins 7 atomes de carbone. La stéaryldiéthanolamine est particulièrement appréciée. Les dialcanolamines à chaîne N-alkyl trop courte ne permettent pas dans les conditions de l'invention, c'est-à-dire en réaction avec le TDI selon le procédé opératoire décrit par la suite, d'aboutir à des latex efficaces pour le collage du papier.

La chaîne polyalkylénique provient de la condensation de préférence de l'oxyde d'éthylène, de l'oxyde de propylène, de l'oxyde de butylène.

Comme rupteur de chaîne, dans le cas où l'on en utilise un pour limiter le poids moléculaire de l'oligouréthanne, on préfère un monoalcool primaire court comme par exemple l'éthanol.

Il est préférable, dans le cadre de l'invention, de mettre la dialcanolamine tertiaire sous sa forme quaternisée avant sa réaction avec le toluène diisocyanate. Néanmoins, il n'est pas impossible de transformer l'amine tertiaire en ammonium quaternaire après ou même pendant la formation de l'oligouréthanne. Les agents quaternisants qui conviennent sont en principe toutes les substances quaternisantes. On citera de préférence des composés contenant un halogène activé comme par exemple

le chlorure, le bromure ou l'iodure de méthyle, le chlorure de benzyle, le chlorure d'allyle, ou encore l'épichlorhydrine ou les esters actifs comme par exemple le sulfate de diméthyle.

Les oligouréthannes décrits selon l'invention sont composés d'unités structurales de formule générale $(AB)_n$, A correspondant à la N-alkyldialcanolamine quaternisée, B correspondant au toluène diisocyanate et n variant de 1 à 6 selon que l'on utilise ou non un composé rupteur de chaîne.

L'oligouréthanne cationique peut donc s'écrire de la façon suivante :

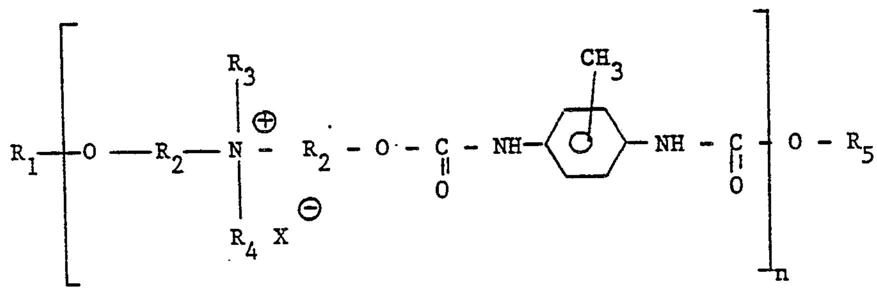

dans lequel

$R_2$ représente un radical alkylène en $C_2$-$C_6$ ou polyoxyalkylénique de degré de condensation de 1 à 4

$R_3$ représente un radical alkyle en $C_7$ minimum

$R_4$ et X représentent le reste de l'agent quaternisant $R_4X$

et dans lequel $R_1$ et $R_5$, ainsi que n, ont les significations suivantes :

a) Lorsqu'on utilise un rupteur de chaîne

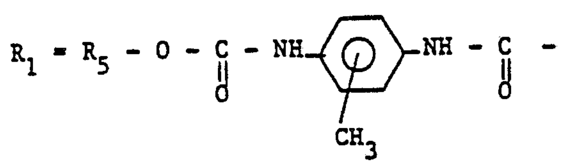

$R_5$ étant un radical aliphatique en $C_4$ maximum et n varie de 1 à 3 ou

b) lorsqu'on n'utilise pas de rupteur de chaîne

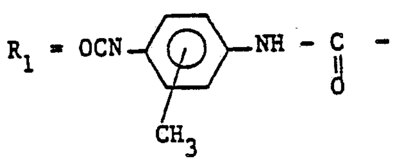

$R_5$ étant :

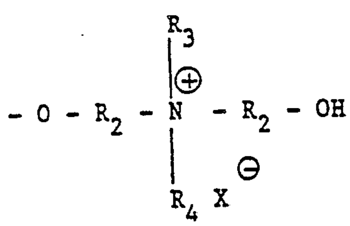

dans lequel $R_2$, $R_3$, $R_4$ et X conservent les significations définies précédemment et n varie de 2 à 6.

Le moment de la quaternisation de la dialconolamine tertiaire n'intervient en aucune façon sur l'enchaînement structural de l'oligouréthanne.

La réaction entre le polyisocyanate, en l'occurence le toluène diisocyanate, et la dialcanolamine éventuellement quaternisée est effectuée habituellement en phase solvant afin de mieux contrôler l'exothermie de la réaction et de limiter ainsi les risques de réticulation conduisant à des gélifications inexploitables. Les solvants utilisés sont à faible point d'ébullition afin qu'ils puissent être facilement éliminés du latex final. Ces solvants doivent par ailleurs faciliter la dispersion du polymère dans l'eau. Le chlorure de méthylène ($CH_2Cl_2$), dans des quantités telles que l'oligouréthanne obtenu ait un extrait sec compris entre 20 et 75 %, est un des solvants préférés.

L'emploi d'un catalyseur favorisant la réaction de polymérisation entre le toluène diisocyanate et une

dialcanolamine ne présente pas d'intérêt puisqu'il va à l'encontre de l'invention qui consiste à faire des oligouréthannes à faible poids moléculaire. Par contre, l'utilisation d'un rupteur de chaîne comme par exemple l'éthanol contribue avantageusement à limiter le poids moléculaire.

La quaternisation de la N-alkyldialcanolamine, et plus particulièrement la stéaryldiéthanolamine, est effectuée entre 25 °C et 100 °C par un agent quaternisant approprié, défini précédemment. Le taux de quaternisation se situe de préférence entre 10 et 60 % par rapport aux azotes quaternisables. Une quaternisation trop élevée nuit à l'efficacité du produit final puiqu'elle contribue à exagérer son caractère hydrophile. Une quaternisation trop faible ne permet pas de disperser correctement le produit de polymérisation. Il est noté que le sulfate de méthyle est l'un des agents quaternisants les plus appropriés dans la mesure où son action est très rapide.

L'oligouréthanne portant des atomes d'azote au moins partiellement quaternisé est en général obtenu sous agitation par addition progressive du toluène diisocyanate sur la N-alkyldialcanolamine quaternisée diluée dans le chlorure de méthylène de façon à obtenir un extrait sec de l'oligouréthanne organique compris entre 20 et 75 %. La réaction, exothermique, est contrôlée par la vitesse d'introduction du toluène diisocyanate ; la température est limitée par le reflux du solvant. On opère habituellement de façon à être en excès de fonctions OH par rapport aux fonctions NCO dans le récipient réactionnel. Ainsi le toluène diisocyanate et les constituants à terminaisons OH, aussi bien l'alcanolamine que le rupteur de chaîne, peuvent être utilisés dans des proportions telles que le rapport NCO/OH soit inférieur ou de préférence égal à 1.

Après la réaction de polmymérisation, la solution organique d'oligouréthanne cationique est mise en dispersion dans l'eau. Cette mise en émulsion dans l'eau de l'oligouréthanne en solution dans le solvant est facilitée par l'utilisation d'un tiers solvant. Ce solvant a pour but d'homogénéiser l'ensemble des trois constituants du mélange en dispersion : l'oligouréthanne, son solvant de solubilisation et l'eau. Par exemple l'association de l'acétone au chlorure de méthylène, deux solvants dont le comportement est totalement opposé vis-à-vis de l'eau, favorise l'obtention de dispersions fines et stables.

La quantité de tiers solvant nécessaire à l'optimisation de la finesse de la dispersion est fonction de la taille de l'oligouréthanne ainsi que de la quantité de solvant dans lequel il est solubilisé. Dans le cas par exemple du couple acétone-chlorure de méthylène il faut selon les cas 2 à 5 fois plus d'acétone que de chlorure de méthylène. L'eau nécessaire à la mise en dispersion doit être supérieure à un seuil, déterminé par la quantité totale des solvants, en dessous duquel il est impossible d'obtenir un latex stable et efficace.

Le mélange de la phase aqueuse et de la phase organique, en présence d'un tiers solvant, peut être effectué par un dispositif mélangeur classique à opération continue. Sinon, dans le cas d'une agitation normale mais néanmoins vive, on a tout intérêt à ajouter l'eau progressivement dans la phase organique jusqu'à l'inversion de phase matérialisée par une brusque diminution de viscosité du mélange en dispersion.

Les solvants sont ensuite éliminés par distillation.

Selon le procédé on obtient des latex d'oligouréthannes cationiques à des teneurs en matière sèche de 10 à 30 % en poids. La dimension de particule n'excède généralement pas 0,5 μ ce qui confère aux latex une excellente stabilité.

Un autre point intéressant réside dans la neutralité des latex obtenus dont les pH sont compris entre 6 et 7. De tels produits sont donc utilisables en milieu neutre, évitant ainsi les nombreux inconvénients des collages classiques en milieu acide. Ils peuvent être utilisés avec toutes les charges usuelles de l'industrie papetière.

## Exemple 1

Quaternisation de l'amine — On introduit dans un réacteur surmonté d'un réfrigérant et muni d'un dispositif d'agitation, 233,5 parties d'une diéthanolamine dérivée des acides gras du suif donc principalement en $C_{18}$, commercialisée par CECA sous l'appellation de NORAMOX $S_2$ (marque déposée : NORAMOX) 16,5 parties de sulfate de diméthyle. Le mélange s'échauffe à 70 °C environ. La quaternisation est terminée dès la fin de l'exothermie.

Polymérisation — Le NORAMOX $S_2$, précédemment quaternisé, est dilué dans 538,5 parties de chlorure de méthylène auquel on ajoute 60,3 parties d'éthanol. On introduit alors progressivement toujours sous agitation 228,2 parties de TDI 80/20 (mélange de 80 % de TDI - 2,4 et de 20 % de TDI - 2,6). Le mélange réactionnel s'échauffe. La vitesse d'introduction de TDI est telle que l'on puisse maintenir régulier le reflux du solvant.

On obtient ainsi un oligouréthanne cationique à 50 % de matière sèche dans le chlorure de méthylène correspondant à la formule donnée dans la description avec un taux de quaternisation de 20 %.

Formation du latex — On ajoute 150 parties d'acétone à 100 parties d'oligouréthanne dans le chlorure de méthylène précédemment préparé. 250 parties d'eau sont alors ajoutées sous agitation violente pour former une émulsion polymère/eau/solvants. Le chlorure de méthylène et l'acétone sont ensuite éliminés par distillation.

On obtient ainsi un latex à 17 % en poids de matière sèche. L'extrait sec du latex peut être amené à 30 % en éliminant une partie de l'eau.

## Exemple 2

On opère selon l'exemple 1 en remplaçant le NORAMOX $S_2$ par le produit commercialisé par CECA sous l'appellation de NORAMOX $C_2$ (marque déposée : NORAMOX) qui est une diéthanolamine dérivant de l'huile de coprah donc comprenant des chaînes grasses en $C_{12}$ (48 %), $C_{14}$ (17 %), $C_{16}$, $C_8$, $C_{10}$ et autres. 146,5 parties de NORAMOX $C_2$ sont quaternisées par 12,6 parties de sulfate de diméthyle puis diluées dans 961,5 parties de chlorure de méthylène.

On ajoute 46 parties d'éthanol puis on introduit progressivement 174 parties de TDI 80/20. L'oligouréthanne cationique obtenu est à 28 % en matière sèche dans le chlorure de méthylène correspondant à la formule donnée dans la description avec un taux de quaternisation de 20 %.

100 parties de cette solution d'oligouréthanne dans le chlorure de méthylène sont mélangées à 200 parties d'acétone puis émulsionnées sous violente agitation dans 300 parties d'eau.

Les solvants sont ensuite éliminés. On obtient un latex dont la teneur en matière sèche va de 9,5 % jusqu'à 30 % en poids selon la quantité d'eau que l'on élimine.

## Exemple 3

Polymérisation — On introduit dans un réacteur surmonté d'un réfrigérant et muni d'un dispositif d'agitation, 178 parties de NORAMOX $S_2$ dans 534 parties de chlorure de méthylène puis on ajoute progressivement 87 parties de TDI 80/20 dans 261 parties de chlorure de méthylène.

Quaternisation — La totalité du chlorure de méthylène est substituée par 795 parties d'acétate d'éthyle. On ajoute ensuite 41,6 parties d'épichlorhydrine. On porte le mélange réactionnel à 70 °C pendant 4 heures. L'oligouréthanne cationique obtenu correspondant à la formule donnée dans la description possède un taux de quaternisation de 20 %.

Formation de latex — Pour 100 parties de polymère dans l'acétate d'éthyle précédemment préparé, on ajoute sous vive agitation, 100 parties d'acétone puis 200 parties d'eau pour former une émulsion. Les solvants sont éliminés par distillation.

On obtient ainsi un latex de 14 à 30 % en poids de matière sèche selon la quantité d'eau que l'on élimine.

## Exemple 4

Quaternisation — On introduit dans un réacteur surmonté d'un réfrigérant et muni d'un dispositif d'agitation 178 parties de NORAMOX $S_2$ et 31,5 parties de sulfate de diméthyle. Le mélange s'échauffe à 70 °C environ. La réaction est pratiquement instantanée.

Polymérisation — Le NORAMOX $S_2$ quaternisé est dilué dans 795 parties de chlorure de méthylène. Puis on ajoute progressivement 87 parties de TDI 80/20. On obtient ainsi un oligouréthanne cationique dans le chlorure de méthylène correspondant à la formule donnée dans la description avec un taux de quaternisation de 50 %.

Formation du latex — 100 parties de la solution d'oligouréthanne obtenue sont mélangées à 200 parties d'acétone puis émulsionnées sous vive agitation dans 350 parties d'eau. Les solvants sont ensuite éliminés.

On obtient ainsi un latex de 7 % à 30 % en poids de matière sèche selon la quantité d'eau éliminée.

## Exemple 5

On opère selon l'exemple 1 mais en remplaçant le sulfate de diméthyle par 12 parties d'épichlorhydrine. L'oligouréthanne obtenu possède un taux de quaternisation de 20 %.

## Exemple 6

On opère selon l'exemple 2, en quaternisant 75,8 parties de NORAMOX $C_2$, par 13 parties de sulfate de diméthyle. La polymérisation se fait en ajoutant 23 parties d'éthanol, 481 parties de chlorure de méthylène puis progressivement 87 parties de TDI 80/20. L'oligouréthanne cationique obtenu possède un taux de quaternisation de 40 %.

100 parties d'oligouréthanne organique ainsi obtenu sont émulsionnées en présence de 200 parties d'acétone, dans 300 parties d'eau. Les solvants sont ensuite éliminés.

## Exemple 7 (comparatif)

On réalise des latex d'oligouréthannes à partir de TDI et d'une diéthanolamine N-substituée par une chaîne courte. On constate que ces latex, difficiles à obtenir, sont totalement inefficaces pour le collage du papier.

Essai 1

On ajoute progressivement 151,3 parties de TDI 80/20 sur un mélange de 51,7 parties de N-méthyldiéthanolamine, 40 parties d'éthanol et 729 parties de chlorure de méthylène. Ce dernier est ensuite substitué par autant d'acétate d'éthyle, puis on quaternise à 70 °C pendant 4 heures par 10 parties d'épichlorhydrine.

100 parties d'oligouréthanne quaternisé sont émulsionnées dans 400 parties d'eau en présence de 100 parties d'acétone. Les solvants sont ensuite éliminés.

Essai 2

L'isopropanol joue le double rôle de solvant et de rupteur de chaîne. L'oligouréthanne P est obtenu par addition progressive de 65,4 parties de TDI 80/20 sur 33,1 parties de N-méthyldiéthanolamine dans 66,5 parties d'isopropanol.

Essai 2.1

L'oligouréthanne P est quaternisé par 15 parties d'épichlorhydrine pendant 4 heures à 60 °C après avoir été solubilisé dans un mélange comprenant 200 parties d'acétate d'éthyle et 300 parties d'acétone.

200 parties de l'oligouréthanne quaternisé en solution sont émulsionnées dans 550 parties d'eau. Les solvants sont ensuite éliminés. On obtient le latex A.

Essai 2.2

L'oligouréthanne P est dissous dans une solution aqueuse d'acide acétique. La solution B obtenue a un pH de 3.

Exemple 8

Pour l'étude des propriétés de collage sur le papier, on utilise le test COBB conformément à la norme ASTM D. 3285 ou à la norme française Q 03-018. Cet essai détermine la quantité d'eau que peut absorber un papier ou un carton pendant un temps donné. On mesure le poids d'eau retenu par unité de surface pendant une durée fixée. Plus l'absorption d'eau est faible et meilleur est l'effet de collage.

L'agent de collage est utilisé dans la masse du papier. Ce papier est préparé selon des conditions s'apparentant à une fabrication industrielle, à partir d'une cellulose fibres longues blanchie et raffinée à 25° S.R. à laquelle on a ajouté le produit de collage dans différentes proportions. Le papier formé a un grammage de 65 g/m$^2$.

La mesure du COBB s'effectue sur un échantillon circulaire de 100 cm$^2$ de surface. Le temps de contact entre l'eau et l'échantillon de papier est de 50 secondes.

A titre de comparaison on utilise également dans les essais un produit de collage cationique déjà connu, utilisable comme les produits de l'invention en milieu neutre et dans la masse, commercialisé par HERCULES sous l'appellation de AQUAPEL 360 (marque déposée : AQUAPEL).

Les résultats obtenus sont résumés dans le tableau suivant :

Le taux de colle est donné en substance active par rapport à la cellulose sèche.

| PRODUIT DE COLLAGE | TAUX DE COLLE DANS LE PAPIER I | II | COBB 60 |
|---|---|---|---|
| AQUAPEL | 0,15 % | - | 21,0 |
| EXEMPLE 1 | 0,5 % | - | 22,1 |
| | 0,25 % | - | 27,3 |
| EXEMPLE 2 | 0,5 % | - | 27,2 |
| EXEMPLE 3 | 0,4 % | - | 20,0 |

Tableau (Suite)

| PRODUIT DE COLLAGE | TAUX DE COLLE DANS LE PAPIER I | - II | COBB 60 |
|---|---|---|---|
| EXEMPLE 4 | 0,5 % | - | 23,9 |
| EXEMPLE 5 | 0,5 % | - | 22,0 |
| EXEMPLE 6 | 0,5 % | - | 27,8 |
| EXEMPLE COMPARATIF 7 | | | |
| Essai 1 | 0,5 % | 2 % | TRANSPERCEMENT |
| Latex A | 0,5 % | 2 % | TRANSPERCEMENT |
| Solution B | 0,5 % | 2 % | TRANSPERCEMENT |

**Revendications** (pour les Etats contractants : BE, CH, DE, FR, GB, IT, LI, NL, SE)

1. Agent de collage pour l'industrie papetière à base de polyuréthane cationique caractérisé en ce qu'il se présente sous forme d'un latex d'oligouréthanne porteur d'atomes d'azote au moins partiellement quaternisé de formule :

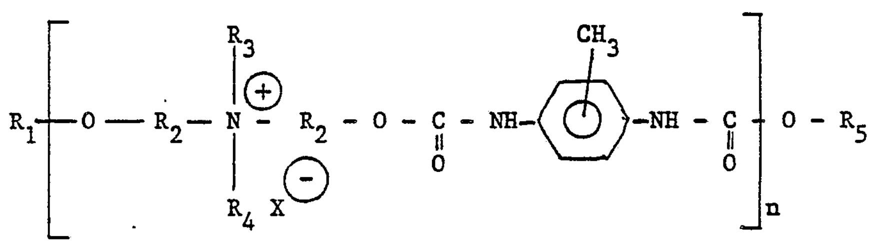

dans lequel

$R_2$ représente un radical alkylène en $C_2$-$C_6$ ou polyoxyalkylénique de degré de polycondensation de 1 à 4

$R_3$ représente un radical alkyle en $C_7$ minimum

$R_4$ et X représentent le reste de l'agent quaternisant $R_4X$

avec

a) $R_1$ représentant

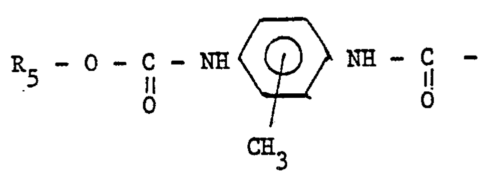

$R_5$ étant un radical aliphatique en $C_4$ maximum et n variant de 1 à 3 ou

b) $R_1$ représentant

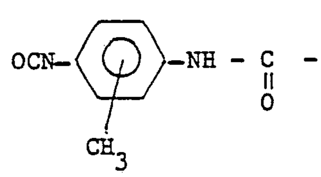

$R_5$ étant :

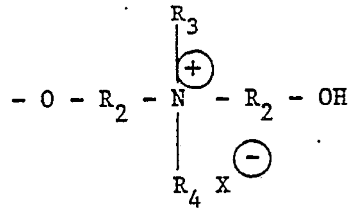

$R_2$, $R_3$, $R_4$ et X conservant les définitions précédentes et n variant de 2 à 6

2. Agent de collage selon la revendication 1 caractérisé en ce que le taux de quaternisation par rapport aux azotes quaternisables se situe entre 10 et 60 %.

3. Agent de collage selon l'une des revendications 1 à 2 caractérisé en ce que le poids moléculaire de l'oligouréthanne est compris entre 500 et 3 000.

4. Procédé de fabrication de l'agent de collage des revendications 1 à 3 par réaction d'un polyisocyanate sur une N-alkyldialcanolamine quaternisée avant, pendant ou après la réaction caractérisé en ce que le polyisocyanate est le toluène diisocyanate et l'amine est une dialcanolamine N substituée contenant deux groupes hydroxy reliés chacun à l'azote par une chaîne aliphatique de 2 à 6 atomes de carbone, le N substituant comprenant au moins 7 atomes de carbone et en ce que après réaction l'oligouréthanne obtenu est dispersé dans l'eau sous forme de latex.

5. Procédé selon la revendication 4 caractérisé en ce que la réaction du toluène diisocyanate sur la dialcanolamine s'effectue en milieu solvant.

6. Procédé selon la revendication 5 caractérisé en ce que le solvant est le chlorure de méthylène.

7. Procédé selon l'une des revendications 4 à 6 caractérisé en ce que la réaction entre le toluène diisocyanate et la dialcanolamine s'effectue en présence d'un rupteur de chaîne.

8. Procédé selon la revendication 7 caractérisé en ce que le rupteur de chaîne est l'éthanol.

9. Procédé selon des revendications 4 à 8 caractérisé en ce que le rapport NCO/OH du milieu réaction est au plus égal à 1.

10. Procédé selon l'une des revendications 4 à 9 caractérisé en ce que l'oligouréthanne est dispersé dans l'eau en présence d'un tiers solvant.

11. Procédé selon la revendication 10 caractérisé en ce que le tiers solvant est l'acétone.

12. Procédé selon l'une des revendications 4 à 11 caractérisé en ce que le solvant est éliminé du latex par distillation.

**Revendications** (pour l'Etat contractant AT)

1. Procédé de fabrication d'un agent de collage pour l'industrie papetière à base d'oligouréthanne porteur d'atomes d'azote au moins partiellement quaternisé de formule :

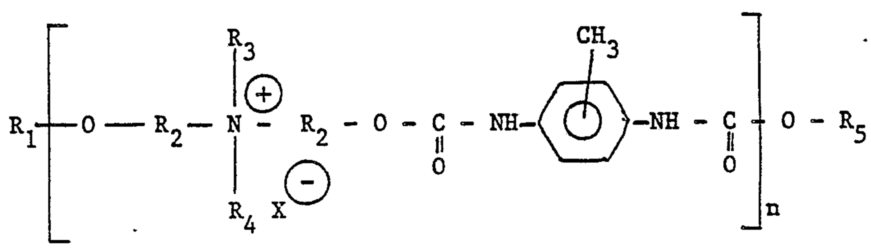

dans lequel

$R_2$ représente un radical alkylène en $C_2$-$C_6$ ou polyoxyalkylénique de degré de polycondensation de 1 à 4

$R_3$ représente un radical alkyle en $C_7$ minimum

$R_4$ et X représentent le reste de l'agent quaternisant $R_4X$

avec

a) $R_1$ représentant

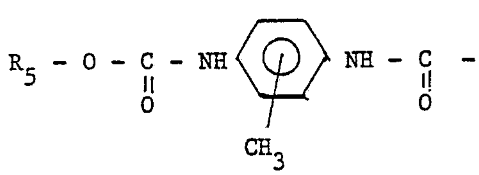

$R_5$ étant un radical aliphatique en $C_4$ maximum et n variant de 1 à 3 ou
b) $R_1$ représentant

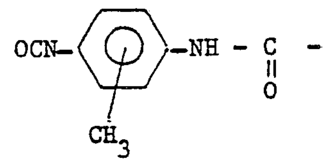

$R_5$ étant :

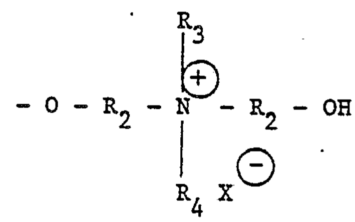

$R_2$, $R_3$, $R_4$ et X conservant les définitions précédentes et n variant de 2 à 6 par réaction d'un polyisocyanate sur une N-alkyldialcanolamine quaternisée avant, pendant ou après la réaction caractérisé en ce que le polyisocyanate est le toluène diisocyanate et la N-alkyldialcanolamine quaternisée est une dialcanolamine N substituée contenant deux groupes hydroxy reliés chacun à l'azote par une chaîne aliphatique de 2 à 6 atomes de carbone, le N substituant comprenant au moins 7 atomes de carbone, et, en ce que après réaction l'oligouréthanne obtenu est dispersé dans l'eau sous forme de latex.

2. Procédé selon la revendication 1, caractérisé en ce que le taux de quaternisation par rapport aux azotes quaternisables se situe entre 10 et 60 %.

3. Procédé selon l'une des revendications 1 à 2, caractérisé en ce que le poids moléculaire de l'oligouréthanne est compris entre 500 et 3 000.

4. Procédé selon l'une des revendications 1 à 3, caractérisé en ce que la réaction du toluène diisocyanate sur la dialcanolamine s'effectue en milieu solvant.

5. Procédé selon l'une des revendications 1 à 4, caractérisé en ce que le solvant est le chlorure de méthylène.

6. Procédé selon l'une des revendications 1 à 5, caractérisé en ce que la réaction entre le toluène diisocyanate et la dialcanolamine s'effectue en présence d'un rupteur de chaîne.

7. Procédé selon l'une des revendications 1 à 6, caractérisé en ce que le rupteur de chaîne est l'éthanol.

8. Procédé selon l'une des revendications 1 à 7, caractérisé en ce que le rapport NCO/OH du milieu réactionnel est au plus égal à 1.

9. Procédé selon l'une des revendications 1 à 8, caractérisé en ce que l'oligouréthanne est dispersé dans l'eau en présence d'un tiers solvant.

10. Procédé selon l'une des revendications 1 à 9, caractérisé en ce que le tiers solvant est l'acétone.

11. Procédé selon l'une des revendications 1 à 10, caractérisé en ce que le solvant est éliminé du latex par distillation.

**Claims** (for the Contracting States : BE, CH, DE, FR, GB, IT, LI, NL, SE)

1. Sizing agent for the papermaking industry based on cationic polyurethane, characterized in that it is in the form of a latex of oligourethane bearing at least partially quaternized nitrogen atoms of formula :

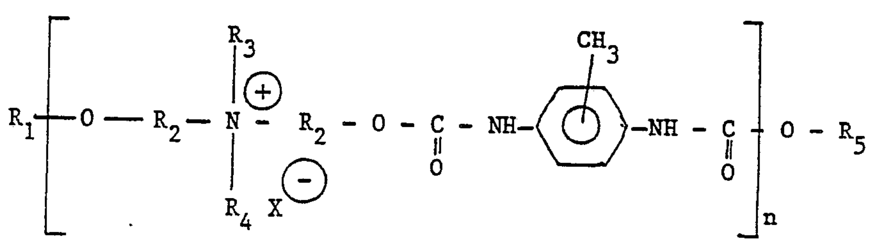

in which

$R_2$ denotes a $C_2$-$C_6$ alkylene radical or a polyoxyalkylene radical with a degree of polycondensation from 1 to 4

$R_3$ denotes a minimum $C_7$ alkyl radical

$R_4$ and X denote the residue of the quaternizing agent $R_4X$

with

a) $R_1$ denoting

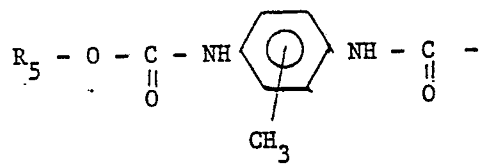

$R_5$ being a maximum $C_4$ aliphatic radical and n varying from 1 to 3.

or

b) $R_1$ denoting

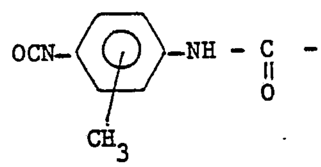

$R_5$ being :

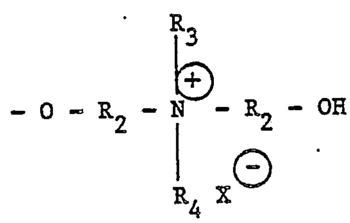

$R_2$, $R_3$, $R_4$ and X retaining the preceding definitions and n varying from 2 to 6.

2. Sizing agent according to Claim 1, characterized in that the degree of quaternization relative to the quaternizable nitrogens lies between 10 and 60 %.

3. Sizing agent according to either of Claims 1 and 2, characterized in that the molecular weight of the oligourethane is between 500 and 3000.

4. Process for the manufacture of the sizing agent of Claims 1 to 3 by reaction of a polyisocyanate with an N-alkyldialkanolamine quaternized before, during or after the reaction, characterized in that the polyisocyanate is toluene diisocyanate and the amine is an N-substituted dialkanolamine containing two hydroxyl groups, each linked to the nitrogen by an aliphatic chain containing 2 to 6 carbon atoms, the N-substituent containing at least 7 carbon atoms, and in that, after reaction, the oligourethane obtained is dispersed in water in latex form.

5. Process according to Claim 4, characterized in that the reaction of toluene diisocyanate with the dialkanolamine is carried out in a solvent medium.

6. Process according to Claim 5, characterized in that the solvent is methylene chloride.

7. Process according to one of claims 4 to 6, characterized in that the reaction between toluene diisocyanate and the dialkanolamine is carried out in the presence of a chain-breaker.

8. Process according to Claim 7, characterized in that the chain-breaker is ethanol.

9. Process according to one of Claims 4 to 8, characterized in that the NCO/OH ratio of the reaction medium does not exceed 1.

10. Process according to one of Claims 4 to 9, characterized in that the oligourethane is dispersed in water in the presence of a third solvent.

11. Process according to claim 10, characterized in that the third solvent is acetone.

12. Process according to one of Claims 4 to 11, characterized in that the solvent is removed from the latex by distillation.

**Claims** (for the Contracting State AT)

1. Process for the manufacture of a sizing agent for the papermaking industry based on an oligourethane bearing at least partially quaternized nitrogen atoms of formula :

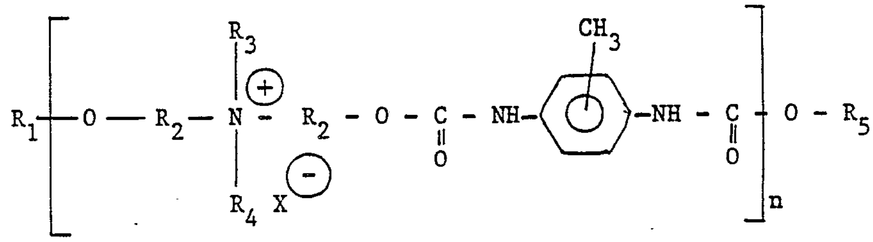

in which

$R_2$ denotes a $C_2$-$C_6$ alkylene radical or a polyoxyalkylene radical with a degree of polycondensation from 1 to 4

$R_3$ denotes a minimum $C_7$ alkyl radical

$R_4$ and X denote the residue of the quaternizing agent $R_4X$

with

a) $R_1$ denoting

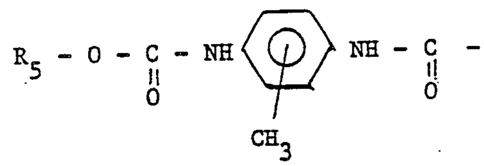

$R_5$ being a maximum $C_4$ aliphatic radical and n varying from 1 to 3 or

b) $R_1$ denoting

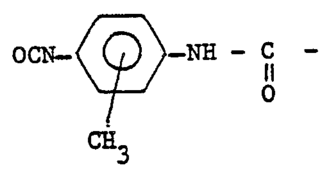

$R_5$ being :

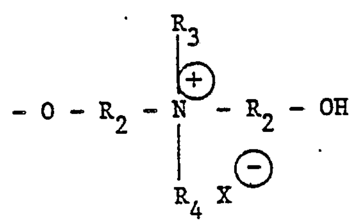

$R_2$, $R_3$, $R_4$ and X retaining the preceding definitions and n varying from 2 to 6, by reaction of a polyisocyanate with an N-alkyldialkanolamine quaternized before, during or after the reaction, characterized in that the polyisocyanate is toluene diisocyanate and the quaternized N-alkyldialkanolamine is an N-substituted dialkanolamine containing two hydroxyl groups, each linked to the nitrogen by an aliphatic chain containing 2 to 6 carbon atoms, the N-substituent containing at least 7 carbon atoms, and in that after reaction the oligourethane obtained is dispersed in water in latex form.

2. Process according to Claim 1, characterized in that the degree of quaternization relative to the quaternizable nitrogens lies between 10 and 60 %.

3. Process according to either of Claims 1 and 2, characterized in that the molecular weight of the oligourethane is between 500 and 3 000.

4. Process according to one of Claims 1 to 3, characterized in that the reaction of toluene diisocyanate with the dialkanolamine is carried out in a solvent medium.

5. Process according to one of Claims 1 to 4, characterized in that the solvent is methylene chloride.

6. Process according to one of Claims 1 to 5, characterized in that the reaction between toluene diisocyanate and the dialkanolamine is carried out in the presence of a chain-breaker.

7. Process according to one of Claims 1 to 6, characterized in that the chain-breaker is ethanol.

8. Process according to one of Claims 1 to 7, characterized in that the NCO/OH ratio of the reaction medium does not exceed 1.

9. Process according to one of Claims 1 to 8, characterized in that the oligourethane is dispersed in water in the presence of a third solvent.

10. Process according to one of Claims 1 to 9, characterized in that the third solvent is acetone.

11. Process according to one of Claims 1 to 10, characterized in that the solvent is removed from the latex by distillation.

**Patentansprüche** (für die Vertragsstaaten : BE, CH, DE, FR, GB, IT, LI, NL, SE)

1. Leimungsmittel für die Papierindustrie auf Basis von kationischem Polyurethan, dadurch gekennzeichnet, daß es in Form eines Latex aus einem zumindest teilweise quaternisierte Stickstoffatome enthaltenden Oligourethan der Formel vorliegt

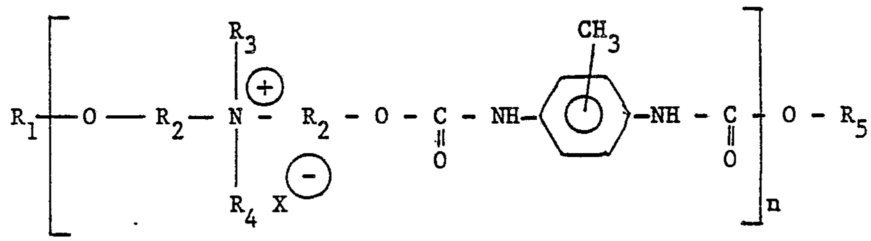

worin

$R_2$ einen $C_2$-$C_6$ Alkylenrest oder Polyoxyalkylenrest mit einem Polykondensationsgrad von 1 bis 4 darstellt

$R_3$ einen Alkylenrest von zumindest $C_7$ darstellt

$R_4$ und X den Rest des Quaternisierungsmittels $R_4X$ darstellen,

wobei

a) $R_1$

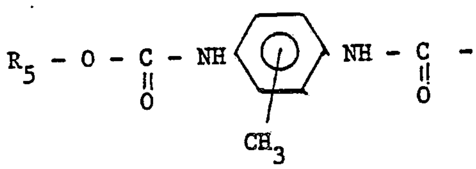

darstellt

$R_5$ ein aliphatischer Rest von höchstens $C_4$ ist und n von 1 bis 3 variiert oder

b) $R_1$

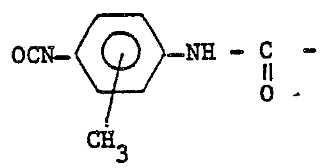

darstellt

$R_5$

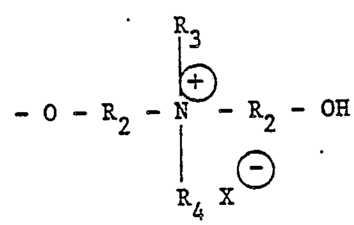

ist

$R_2$, $R_3$, $R_4$ und X die vorstehenden Bedeutungen bewahren und n von 2 bis 6 variiert.

2. Leimungsmittel nach Anspruch 1, dadurch gekennzeichnet, daß der Quaternisierungsgrad, bezogen auf die quaternisierbaren Stickstoffatome, zwischen 10 und 60 % liegt.

3. Leimungsmittel nach einem der Ansprüche 1 bis 2, dadurch gekennzeichnet, daß das Molekulargewicht des Oligourethans zwischen 500 und 3 000 liegt.

4. Verfahren zur Herstellung des Leimungsmittels nach Anspruch 1 bis 3 durch Reaktion eines

Polyisocyanats mit einem zuvor, während oder nach der Reaktion quaternisierten N-Alkyldialkanolamin, dadurch gekennzeichnet, daß das Polyisocyanat Toluoldiisocyanat ist und das Amin ein N-substituiertes Dialkanolamin ist, daß 2 jeweils durch eine aliphatische Kette mit 2 bis 6 Kohlenstoffatomen mit dem Stickstoff verbundene Hydroxygruppen enthält, wobei der N-Substituent wenigstens 7 Kohlenstoffatome umfaßt, und das nach der Reaktion erhaltene Oligourethan in Form eines Latex in Wasser dispergiert wird.

5. Verfahren nach Anspruch 4, dadurch gekennzeichnet, daß die Reaktion des Toluoldiisocyanats mit dem Alkanolamin in Lösung bewirkt wird.

6. Verfahren nach Anspruch 5, dadurch gekennzeichnet, daß das Lösungsmittel Methylenchlorid ist.

7. Verfahren nach einem der Ansprüche 4 bis 6, dadurch gekennzeichnet, daß die Reaktion zwischen dem Toluoldiisocyanat und dem Dialkanolamin in Gegenwart eines Kettenunterbrechers durchgeführt wird.

8. Verfahren nach Anspruch 7, dadurch gekennzeichnet, daß der Kettenunterbrecher Ethanol ist.

9. Verfahren nach einem der Ansprüche 4 bis 8, dadurch gekennzeichnet, daß das Verhältnis NCO/OH im Reaktionsmedium höchstens gleich 1 ist.

10. Verfahren nach einem der Ansprüche 4 bis 9, dadurch gekennzeichnet, daß das Oligourethan in Wasser in Gegenwart eines dritten Lösungsmittels dispergiert ist.

11. Verfahren nach Anspruch 10, dadurch gekennzeichnet, daß das dritte Lösungsmittel Aceton ist.

12. Verfahren nach einem der Ansprüche 4 bis 11, dadurch gekennzeichnet, daß das Lösungsmittel aus dem Latex durch Destillation entfernt wird.

**Patentansprüche** (für den Vertragsstaat AT)

1. Verfahren zur Herstellung eines Leimungsmittels für die Papierindustrie auf Basis eines Olegourethans, das zumindest teilweise quaternisierte Stickstoffatome aufweist, der Formel

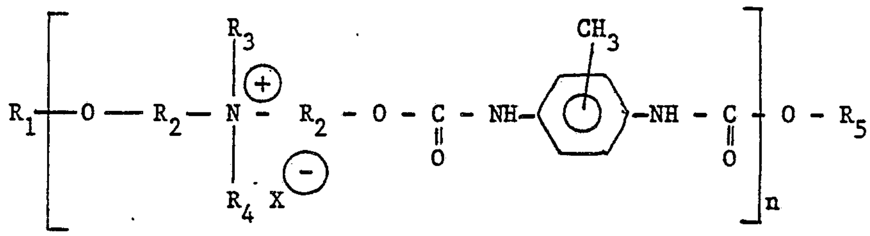

worin

$R_2$ einen $C_2$-$C_6$ Alkylenrest oder Polyoxyalkylenrest mit einem Polykondensationsgrad von 1 bis 4 darstellt

$R_3$ einen Alkylenrest von zumindest $C_7$ darstellt

$R_4$ und X den Rest des Quaternisierungsmittels $R_4X$ darstellen,

wobei

a) $R_1$

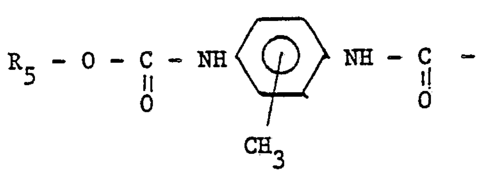

darstellt.

$R_5$ ein aliphatischer Rest von höchstens $C_4$ ist und n von 1 bis 3 variiert oder

b) $R_1$

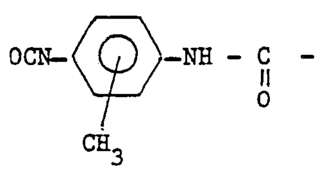

darstellt

$R_5$ ist :

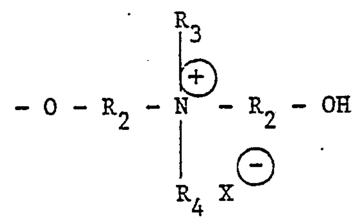

ist.
$R_2$, $R_3$, $R_4$ und X die vorstehenden Bedeutungen bewahren und n von 2 bis 6 variiert, durch Reaktion eines Polyisocyanats mit einem vor, während oder nach der Reaktion quaternisierten N-Alkyldialkanolamin, dadurch gekennzeichnet, daß das Polyisocyanat Toluoldiisocyanat ist und das Amin ein N-substituiertes Dialkanolamin ist, daß 2 jeweils durch eine aliphatische Kette mit 2 bis 6 Kohlenstoffatomen mit dem Stickstoff verbundene Hydroxygruppen enthält, wobei der N-Substituent wenigstens 7 Kohlenstoffatome umfaßt, und das nach der Reaktion erhaltene Oligourethan in Form eines Latex in Wasser dispergiert wird.

2. Verfahren nach Anspruch, dadurch gekennzeichnet, daß der Quaternisierungsgrad, bezogen auf die quaternisierbaren Stickstoffatome, zwischen 10 und 60 % liegt.

3. Verfahren nach einem der Ansprüche 1 bis 2, dadurch gekennzeichnet, daß das Molekulargewicht des Oligourethans zwischen 500 und 3 000 liegt.

4. Verfahren nach einem der Ansprüche 1 bis 3, dadurch gekennzeichnet, daß die Reaktion des Toluoldiisocyanats mit dem Dialkanolamin in einem Lösungsmittel bewirkt wird.

5. Verfahren nach einem der Ansprüche 1 bis 4, dadurch gekennzeichnet, daß das Lösungsmittel Methylenchlorid ist.

6. Verfahren nach einem der Ansprüche 1 bis 5, dadurch gekennzeichnet, daß die Reaktion zwischen den Toluoldiisocyanat und dem Dialkanolamin in Gegenwart eines Kettenunterbrechers durchgeführt wird.

7. Verfahren nach einem der Ansprüche 1 bis 6, dadurch gekennzeichnet, daß der Kettenunterbrecher Ethanol ist.

8. Verfahren nach einem der Ansprüche 1 bis 7, dadurch gekennzeichnet, daß das Verhältnis NCO/OH im Reaktionsmedium höchstens gleich 1 ist.

9. Verfahren nach einem der Ansprüche 1 bis 8, dadurch gekennzeichnet, daß das Oligourethan im Wasser in Gegenwart eines dritten Lösungsmittel dispergiert wird.

10. Verfahren nach einem der Ansprüche 1 bis 9, dadurch gekennzeichnet, daß das dritte Lösungsmittel Aceton ist.

11. Verfahren nach einem der Ansprüche 1 bis 10, dadurch gekennzeichnet, daß das Lösungsmittel aus dem Latex durch Destillation entfernt wird.